Europäisches Patentamt

European Patent Office

Office européen des brevets

(11) Veröffentlichungsnummer: **0 080 696**
A1

(12) **EUROPÄISCHE PATENTANMELDUNG**

(21) Anmeldenummer: **82110869.3**

(22) Anmeldetag: **24.11.82**

(51) Int. Cl.³: **F 24 J 3/02**

(30) Priorität: **02.12.81 AT 5181/81**

(43) Veröffentlichungstag der Anmeldung:
**08.06.83 Patentblatt 83/23**

(84) Benannte Vertragsstaaten:
**BE CH DE FR GB IT LI LU NL SE**

(71) Anmelder: **VOEST-ALPINE Aktiengesellschaft
Werksgelände
A-4010 Linz(AT)**

(72) Erfinder: **Sernetz, Heinz Dipl.-Ing. Dr. techn.
Villa Frohsinn Jungberg 3
A-8200 Gleisdorf(AT)**

(72) Erfinder: **Hirschler, Josef
Hans Mauracherstrasse 11
A-8010 Graz(AT)**

(74) Vertreter: **Kliment, Peter, Dipl.-Ing.Mag.-iur.
Singerstrasse 8
A-1010 Wien(AT)**

(54) **Sonnenkollektor.**

(57) Sonnenkollektor, insbesondere für Niedertemperatur-Anwendung mit einem von einem Wärmeträger durchflossenen Kanal (4, 4'), der von einer Abdeck- (2) und einer Bodenplatte (1) gebildet ist, wobei die Abdeckplatte (2) mit einer als Absorber dienenden Oberfläche versehen und aus mit gut wärmeleitenden Materialien z.B. Metallgranulat oder Metallfäden, gefülltem schwarz eingefärbtem Kunststoff hergestellt ist, wobei die Bodenplatte (1) aus mit wärmeisolierenden Materialien gefülltem Kunststoff hergestellt ist, wobei die Abdeck- (2) und die Bodenplatte (1), abgesehen von der Füllung, aus gleichartigem Kunststoff hergestellt sind, der die wärmeleitenden und wärmeisolierenden Materialien der Abdeck- und Bodenplatte bindet, wobei, wie an sich bekannt, der Kanal (4, 4') für den Wärmeträger schlangenartig ausgebildet ist.

Fig. 1

-1-

## Sonnenkollektor

Die Erfindung bezieht sich auf einen Sonnenkollektor, insbesondere für Niedertemperatur-Anwendung mit einem von einem Wärmeträger durchflossenen Kanal, der von einer Abdeck- und einer Bodenplatte gebildet ist, wobei die Abdeckplatte mit einer als Absorber dienenden Oberfläche versehen und aus mit gut wärmeleitenden Materialien z.B. Metallgranulat oder Metallfäden, gefülltem schwarz eingefärbtem Kunststoff hergestellt ist.

Ein derartiger Sonnenkollektor wurde z.B. durch die FR-PS 2 295 372 bekannt. Bei diesem bekannten Kollektor besteht die Bodenplatte aus einem isolierenden Material beliebiger Zusammensetzung z.B. Beton od.dgl., auf welche die Abdeckplatte dicht aufgesetzt wird und der sich so ergebende Hohlraum einen Kanal bildet.

Durch die Verwendung unterschiedlicher Materialien müssen bei der Herstellung entsprechend unterschiedliche Bearbeitungs- und Herstellungsmaschinen eingesetzt werden, wodurch sich die Herstellung verkompliziert und verteuert. Außerdem ergeben sich bei den bekannten Kollektoren Korrosionsprobleme, wenn sie von aggessiven Medien, wie z.B. Wasser für ein Schwimmbecken durchströmt werden. Aus diesem Grunde wurde meist ein Wärmetauscher für die Beckenvorwärmung vorgesehen, wodurch aber der Wirkungsgrad einer solchen Anlage stark absinkt.

Ziel der Erfindung ist es einen Kollektor der eingangs erwähnten Art vorzuschlagen, der sich einfach herstellen läßt und der sich trotzdem durch einen hohen Wirkungsgrad und die Eignung für aggressive Medien auszeichnet.

Erfindungsgemäß wird dies dadurch erreicht, daß die Bodenplatte aus mit wärmeisolierenden Materialien gefülltem Kunststoff hergestellt ist, wobei die Abdeck- und die Bodenplatte, abgesehen von der Füllung, aus gleichartigem Kunststoff hergestellt sind, der die wärmeleitenden und wärmeisolierenden Materialien der Abdeck- und Bodenplatte bindet, wobei, wie an sich bekannt, der Kanal für den Wärmeträger schlangenartig ausgebildet ist.

Auf diese Weise lassen sich die beiden Teile des erfindungsgemäßen Kollektors, die gegen aggressive Medien weitgehend unempfindlich sind einfach durch Gießen herstellen, wobei aufgrund der Verwendung gleichartiger Kunststoffe bei der Herstellung mit gleichartigen Maschinen das Auslangen gefunden wird und sich auch eine einfache Lagerhaltung ergibt. Durch einen entsprechend hoch gewählten Füllungsgrad der Abdeckplatte von z.B. 60-95Vol-% wärmeleitendes Material lassen sich Wärmeleitzahlen bis zu 85 kcal/mhC° (356 150 J/m.h.K°) erreichen, die im Bereich von Metallplatten liegen. Gleichzeitig lassen sich durch die Füllung des Kunststoffes mit wärmeisolierendem Material z.B. Füllstoffe auf Mineral- oder Kunststoffbasis, Wärmeleitzahlen von 2 kcal/m.h. C° (8 380 J/m.h.K°) erreichen, so daß eine Ableitung von Wärme über die Bodenplatte in die Umgebung weitgehend unterbunden ist.

Durch die Anordnung der die Kanalabschnitte bzw. die Kanäle trennenden Stege an der Abdeckplatte statt wie bisher üblich an der Bodenplatte wird erreicht, daß auch im Bereich der Seitenwände der Kanaäle und nicht bloß an der Unterseite der Abdeckplatte die absorbierte Wärme in das die Kanäle durchströmende Medium übertreten kann. Dadurch wird auf sehr einfache Weise ein optimaler Wärmeübergang vom Absorber zum zu erwärmenden Medium erreicht.

Nach einem weiteren Merkmal der Erfindung ist vorgesehen, daß die Abdeckplatte aus transparentem, UV-beständigem, mit schwarz eingefärbten metallischen Füllstoffen gefülltem Kunststoff hergestellt ist, und an ihrer äußeren Oberfläche eine dünne vorzugsweise durch Absetzen während des Aushärtens gebildete Schicht aus ungefülltem transparentem Kunststoff aufweist. Dadurch läßt sich auf einfache Weise eine Abstrahlung von Energie von der absorbierenden Oberfläche in die Umgebung reduzieren, da transparente Kunststoffe für kurzwellige Strahlung sehr durchlässig sind, nicht aber für relativ langwellige Wärmestrahlung. Dadurch läßt sich ein Wirkungsgrad erreichen, der mit jenem beschichteter Kollekor bzw. Kollektoren mit mit Glas od.dgl. abgedeckten Absorbern vergleichbar ist. Trotzdem bleibt der Vorteil des einfachen Aufbaues beim erfindungsgemäßen Kollektor erhalten, wobei dieser leicht so dimensioniert werden kann, daß er begangen werden und daher auch auf Wegen, Beckenumrandungen u.dgl. verlegt werden kann. Aufgrund der hohen Wärmeleitzahl der Abdeckplatte kann diese entsprechend stark dimensioniert werden, ohne daß dadurch nennenswerte Einbußen im Hinblick auf den Wirkungsgrad in Kauf genommen werden müßten.

Nach einem weiteren Merkmal der Erfindung wird ein Verfahren zur Herstellung eines erfindungsgemäßen Sonnenkollektors vorgeschlagen, das dadurch gekennzeichnet ist, daß zuerst die Abdeckplatte hergestellt und erhärten gelassen wird, danach die Bodenplatte hergestellt und die Abdeckplatte mit den den Kanal begrenzenden Stegen in die noch weiche und leicht plastisch verformbare Bodenplatte eingedrückt und erhärten gelassen wird. Auf diese Weise wird eine sehr dichte und feste Verbindung der beiden Teile des Kollektors ähnlich einer Schrumpf- oder Klebeverbindung erzielt.

Eine weitere Möglichkeit besteht auch darin, beide Teile zumindest an den einander zugekehrten Flächen soweit zu erhitzen, daß sie in diesem Bereich weitgehend erweichen und dann zusammenzupressen, so daß es zu einer Art Verschweissung kommt.

Die Erfindung wird nun an Hand der Zeichnung näher erläutert. Dabei zeigt

Figur 1 einen Schnitt durch einen erfindungsgemäßen Kollektor und

Figur 2 eine Draufsicht auf die Bodenplatte auf der strichliert der Verlauf der Stege der Abdeckplatte eingezeichnet ist.

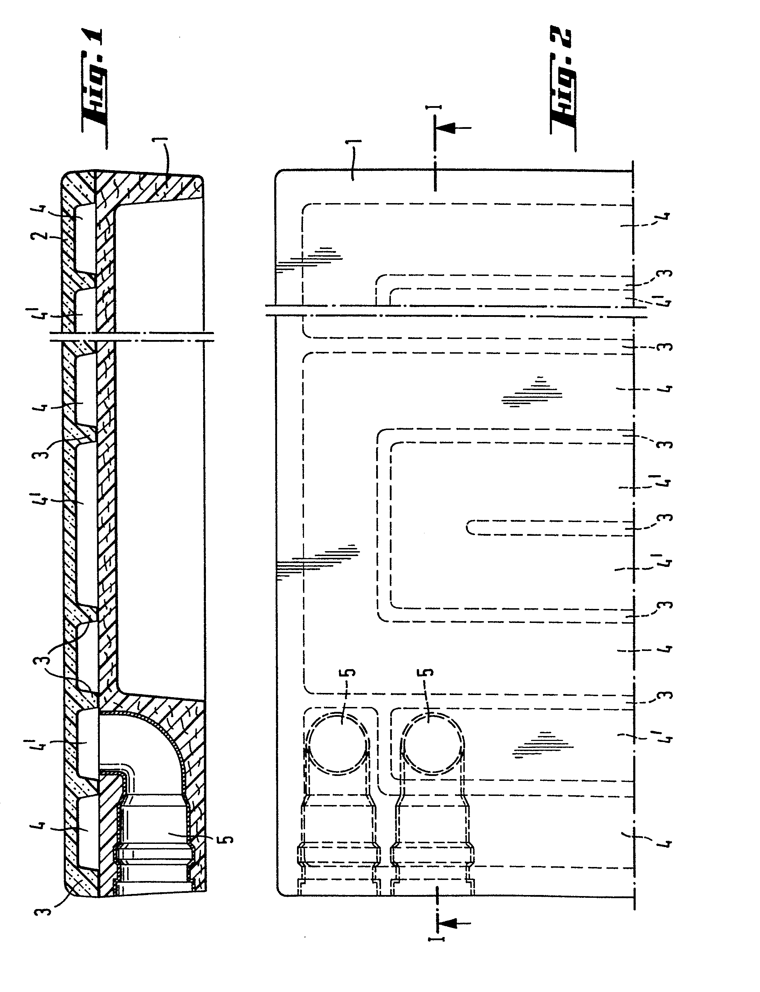

Die Bodenplatte 1 ist aus einem mit wärmeisolierendem Material, z.B. mit Füllstoffen auf Mineral- oder Kunststoffbasis gefülltem Kunststoff, vorzugsweise Reaktionsharz hergestellt und weist eine sehr niedrige Wärmeleitzahl auf. Wie aus Figur 1 ersichtlich, ist die Bodenplatte 1 an ihrer der Abdeckplatte 2 zugekehrten Seite eben ausgebildet.

Die Abdeckplatte 2 ist ebenfalls aus Kunststoff hergestellt, der jedoch mit gut wärmeleitendem Material, wie z.B. Metallgranulat, Metallfäden od.dgl. in einem hohen Ausmaß gefüllt ist und daher eine hohe Wärmeleitzahl aufweist. Das Füllmaterial ist schwarz gefärbt, wogegen der als Bindemittel dienende Kunststoff selbst zweckmäßigerweise glasklar ist. Dabei ist es vorteilhaft, wenn die oberste Schichte der Abdeckplatte 2 nur wenig oder gar nicht gefüllt ist. Dies läßt sich einfach dadurch erreichen, daß das Aushärten der Abdeckplatte 2 bei ihrer Herstellung entsprechend langsam erfolgt um ein Absetzen des spezifisch schwereren Füllmaterials zu ermöglichen.

Die Abdeckplatte 2 ist mit Stegen 3 versehen, welche die Kanäle 4,4' begrenzen. Diese Kanäle 4,4' verlaufen schlangenlinienartig, wie aus Fig. 2 zu ersehen ist.

Jeder dieser Kanäle 4,4' führt zu Kniestücken 5, die in die Bodenplatte 1 eingelegt sind, wobei sie mit ihren senkrecht zur Ebene der Bodenplatte 1 stehenden Schenkel von unten her in die Kanäle 4,4' münden. Durch diese Anordnung wird erreicht, daß Luftblasen vom durch die Kanäle 4,4' strömenden Fluid mitgerissen werden und so eine Selbstentlüftung erreicht wird.

Vorzugsweise werden für die Herstellung der Abdeck- und Bodenplatte 2,1 Reaktionsharze verwendet, die je nach dem ob eine Abdeck- oder Bodenplatte hergestellt werden soll mit unterschiedlichen Füllmaterialien gefüllt werden. Außerdem ergibt sich auch noch die Möglichkeit eine bereits ausgehärtete Abdeckplatte 2 in eine in Aushärtung begriffene noch weiche Bodenplatte 1 einzudrücken und so eine sehr innige und dichte Verbindung der beiden Teile zu erzielen.

Die beiden Kanäle 4,4' des Kollektors werden zweckmäßigerweise im Gegenstrom durchflossen, wodurch sich ein besserer Wirkungsgrad und ein geringerer Montageaufwand bei der Montage von Kollektorbatterien ergibt, die vorteilhafterweise durch
in Serie geschaltete Kollektoren gebildet werden.

Patentansprüche:

1. Sonnenkollektor, insbesondere für Niedertemperatur-Anwendung mit einem von einem Wärmeträger durchflossenen Kanal, der von einer Abdeck- und einer Bodenplatte gebildet ist, wobei die Abdeckplatte mit einer als Absorber dienenen Oberfläche versehen und aus mit gut wärmeleitenden Materialien z.B. Metallgranulat oder Metallfäden, gefülltem schwarz eingefärbtem Kunststoff hergestellt ist,
dadurch gekennzeichnet,
daß die Bodenplatte (1) aus mit wärmeisolierenden Materialien gefülltem Kunststoff hergestellt ist, wobei die Abdeck- und die Bodenplatte (1), abgesehen von der Füllung, aus gleichartigem Kunststoff hergestellt sind, der die wärmeleitenden und wäremisolierenden Materialien der Abdeck- und Bodenplatte bindet, wobei, wie an sich bekannt, der Kanal für den Wärmeträger schlangenartig ausgebildet ist.

2. Sonnenkollektor nach Anspruch 1,
dadurch gekennzeichnet,
daß die Abdeckplatte (2) aus einem im ungefüllten Zustand transparenten, UV-beständigen Kunststoff hergestellt ist, und an ihrer äußeren Oberfläche eine dünne durch Absetzen während des Erhärtens gebildete Schicht aus ungefülltem transparentem Kunststoff aufweist.

3. Sonnenkollektor nach einem der Ansprüche 1 oder 2,
dadurch gekennzeichnet,
daß die Abdeckplatte (2) stark gefüllt ist und der Volumsanteil des zur Füllung verwendeten wärmeleitenden Materials 60 bis 95 Vol.-% der Abdeckplatte beträgt.

4. Verfahren zur Herstellung eines Sonnenkollektors nach einem der Ansprüche 1 bis 3,
dadurch gekennzeichnet,
daß zuerst die Abdeckplatte hergestellt und erhärten gelassen wird, danach die Bodenplatte geformt und die Abdeckplatte mit den den Kanal begrenzenden Stegen in die
noch weiche und leicht plastisch verformbare Bodenplatte
eingedrückt und erhärten gelassen wird.

**Fig. 1**

**Fig. 2**

| EINSCHLÄGIGE DOKUMENTE | | EP 82110869.3 |
|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D | <u>FR - A1 - 2 295 372</u> (DUTHEIL DE LA ROCHERE) | 1 | F 24 J 3/02 |
| Y | * Gesamt * | | |
| Y | <u>DE - A1 - 2 919 458</u> (HÖLTER) | 1 | |
| | * Seite 4, 1. Absatz; Seite 8, 5. Absatz * | | |
| A | <u>DE - A1 - 2 711 807</u> (DORNIER SYSTEM) | 2 | |
| | * Gesamt * | | |
| A | <u>DE - A1 - 2 641 119</u> (PIEPEREIT) | 2 | |
| | * Anspruch 5 * | | RECHERCHIERTE SACHGEBIETE (Int. Cl. ³) |
| A | <u>US - A - 3 968 786</u> (SPIELBERG) | 3 | F 24 J |
| | * Spalte 3, Zeilen 54-57 * | | B 29 C |
| | | | B 29 D |
| A | <u>DE - A1 - 3 041 236</u> (PEVECETTE APS) | 4 | C 08 J |
| P | * Ansprüche 11,12,15 * | | C 09 D |
| | | | E 04 C |
| A | <u>DE - A1 - 2 718 626</u> (PORTLAND-ZEMENTWERKE) | 1,4 | |
| | * Gesamt * | | |

Der vorliegende Recherchenbericht wurde für alle Patentansprüche erstellt.

| Recherchenort | Abschlußdatum der Recherche | Prüfer |
|---|---|---|
| WIEN | 24-02-1983 | SCHMIDT |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82